# EUROPÄISCHE PATENTANMELDUNG

(11) **EP 4 458 612 A1**
(43) Veröffentlichungstag der Anmeldung: **06.11.2024**
(21) Anmeldenummer: 23171653.1
(22) Anmeldetag: 04.05.2023
(51) Int. Cl.: B60Q 1/00, F21S 41/13, F21S 41/16, F21S 41/365, F21S 41/675

(54) **OPTISCHE VORRICHTUNG FÜR EIN KRAFTFAHRZEUG**

(71) Anmelder: ZKW Group GmbH, 3250 Wieselburg (AT)
(72) Erfinder: Musheghyan, Mikayel, 3250 Wieselburg (AT); Hartmann, Peter, 3394 Schönbühel an der Donau (AT); Schmidt, Patrick, 3250 Wieselburg (AT)
(74) Vertreter: Patentanwaltskanzlei Matschnig & Forsthuber OG

(57) **Zusammenfassung**

Optische Vorrichtung (1) für ein Kraftfahrzeug, zur Projektion eines Grafikelements in einen Bereich vor der optischen Vorrichtung, umfassend eine Laserlichtquelle (2), eine Infrarotlichtquelle (3), eine Lichtleitvorrichtung (4), einen Infrarotdetektor (5), eine time-offlight Sensorvorrichtung (6), eine Steuervorrichtung (7), wobei die Lichtleitvorrichtung (4) dazu eingerichtet ist, mit Laserlicht der Laserlichtquelle (2) eine Lichtverteilung zu erzeugen und aus Infrarotlicht der Infrarotlichtquelle ein Infrarotlichtbündel, zu formen, wobei der Infrarotdetektor (5) dazu eingerichtet ist, von einem Messobjekt reflektiertes Infrarotlicht zu detektieren und ein erstes Sensorsignal zu senden, wobei die Sensorvorrichtung (6) dazu eingerichtet ist, ein Messobjekt sensorisch zu erfassen und ein zweites Sensorsignal zu senden, wobei die Steuervorrichtung (7) dazu eingerichtet ist, die Lichtverteilung in Abhängigkeit des ersten Sensorsignals und des zweiten Sensorsignals zu verändern.

## Beschreibung

### Technisches Gebiet

Die Erfindung betrifft eine optische Vorrichtung für ein Kraftfahrzeug, insbesondere für einen Kraftfahrzeugscheinwerfer, zur Projektion eines Grafikelements in einen Bereich vor der optischen Vorrichtung, bevorzugt eine Verkehrsfläche, umfassend
* eine Laserlichtquelle zur Erzeugung und Abstrahlung von, bevorzugt sichtbarem, Laserlicht, wobei die Laserlichtquelle dazu eingerichtet ist, sichtbares Laserlicht in Form eines Grafikelements darzustellen,
* eine Infrarotlichtquelle zur Erzeugung und Abstrahlung von Infrarotlicht,
* eine Lichtleitvorrichtung, zur Lichtleitung von Licht entlang eines Strahlengangs, umfassend ein erstes Umlenkelement, beispielsweise ein Strahlvereinigungselement, eine Mikrospiegelvorrichtung und ein zweites Umlenkelement,
* einen Infrarotdetektor zur Detektion von Infrarotlicht,
* eine Steuervorrichtung,

wobei die Laserlichtquelle dazu eingerichtet ist, Laserlicht entlang einer Laserlichtabstrahlrichtung abzustrahlen, wobei die Infrarotlichtquelle dazu eingerichtet ist, Infrarotlicht entlang einer Infrarotlichtabstrahlrichtung abzustrahlen, wobei die Laserlichtquelle und die Infrarotlichtquelle derart zueinander angeordnet sind, dass die Laserlichtabstrahlrichtung im Wesentlichen parallel zur Infrarotlichtabstrahlrichtung ist,
wobei die Lichtleitvorrichtung entlang der Laserlichtabstrahlrichtung und entlang der Infrarotlichtabstrahlrichtung nach der Laserlichtquelle und der Infrarotlichtquelle angeordnet und dazu eingerichtet ist, mit dem Laserlicht der Laserlichtquelle eine Lichtverteilung, insbesondere eine Bodenprojektion-Lichtverteilung oder eine Signal-Lichtverteilung, in einem Laserlichtausleuchtbereich vor der optischen Vorrichtung zu erzeugen, und aus dem Infrarotlicht der Infrarotlichtquelle ein Infrarotlichtbündel, mit welchem ein Infrarotlichtausleuchtbereich vor der optischen Vorrichtung mit Infrarotlicht ausleuchtbar ist, zu erzeugen.

Die Erfindung betrifft einen Kraftfahrzeugscheinwerfer, umfassend eine optische Vorrichtung.

Die Erfindung betrifft ein Kraftfahrzeug, umfassend einen Kraftfahrzeugscheinwerfer.

Die Erfindung betrifft weiters ein Verfahren zur Steuerung, bevorzugt zur Sicherheitsabschaltung, einer Laserlichtverteilung.

### Technischer Hintergrund

Im Stand der Technik sind optische Vorrichtungen für ein Kraftfahrzeug zur Projektion eines Grafikelements in einen Bereich vor der optischen Vorrichtung, beispielsweise eine Verkehrsfläche, bekannt. Bei der Verwendung von Laserlichtquellen zur Erzeugung der Lichtverteilung ist es bekannt, zur Steuerung, insbesondere zur Notabschaltung des Laserlichts, eine Infrarotlichtquelle und einen damit gekoppelten Infrarotdetektor einzusetzen. Mit dem Infrarotdetektor können beispielsweise Fußgänger detektiert werden, wobei nach erfolgter Detektion eine Ansteuerung der Laserlichtquelle erfolgt, sodass der Fußgänger nicht mit Laserlicht geblendet wird.

Derartige optische Vorrichtungen haben jedoch den Nachteil, dass eine getrennte Lichtstrahlensteuerung von Laserlicht und Infrarotlicht erfolgt, wodurch die optischen Vorrichtungen einen komplexen Aufbau haben. Ferner kann bei einem Ausfall des Infrarotdetektors die Ansteuerung der Laserlichtquelle nicht mehr gemäß den Sicherheitsanforderungen erfolgen.

Die Aufgabe der vorliegenden Erfindung besteht darin, die Nachteile des Standes der Technik zu lindern bzw. zu beseitigen. Die Erfindung setzt sich daher insbesondere zum Ziel, eine optische Vorrichtung zu schaffen, bei welcher eine zuverlässige und einfache Steuerung der erzeugbaren Lichtverteilung erfolgt.

Diese Aufgabe wird durch eine optische Vorrichtung mit den Merkmalen von Anspruch 1 und mit einem Verfahren gemäß Anspruch 15 gelöst. Bevorzugte Ausführungen sind in den abhängigen Ansprüchen angegeben.

### Kurzdarstellung der Erfindung

Erfindungsgemäß trifft zur Erzeugung der Lichtverteilung Laserlicht der Laserlichtquelle auf das erste Umlenkelement, welches dazu eingerichtet ist, auftreffendes Laserlicht auf die Mikrospiegelvorrichtung zu richten oder umzulenken, welche dazu eingerichtet ist, von dem ersten Umlenkelement gerichtetes oder umgelenktes Laserlicht zu empfangen und aus diesem die Lichtverteilung zu formen, wobei das die Lichtverteilung formende Laserlicht von der Mikrospiegelvorrichtung auf das zweite Umlenkelement umgelenkt wird, welches dazu eingerichtet ist, die Lichtverteilung vor die optische Vorrichtung in den Laserlichtausleuchtbereich zu lenken, wobei das Laserlicht ausgehend von der Laserlichtquelle bis zum zweiten Umlenkelement einem ersten Strahlengang folgt,
wobei zur Erzeugung des Infrarotlichtbündels Infrarotlicht der Infrarotlichtquelle auf das erste Umlenkelement trifft, welches dazu eingerichtet ist, auftreffendes Infrarotlicht auf die Mikrospiegelvorrichtung umzulenken, welche dazu eingerichtet ist, von dem ersten Umlenkelement umgelenktes Infrarotlicht zu empfangen und aus diesem das Infrarotlichtbündel zu formen, wobei das das Infrarotlichtbündel formende Infrarotlicht von der Mikrospiegelvorrichtung auf das zweite Umlenkelement umgelenkt wird, welches dazu eingerichtet ist, das Infrarotlichtbündel vor die optische Vorrichtung in den Infrarotlichtausleuchtbereich zu lenken, wobei das Infrarotlicht ausgehend von der Laserlichtquelle bis zum zweiten Umlenkelement einem zweiten Strahlengang folgt,
wobei der erste Strahlengang und der zweite Strahlengang einen im Wesentlichen gleichen Verlauf aufweisen,
wobei der Infrarotdetektor dazu eingerichtet ist, von einem Messobjekt, welches sich vor der optischen Vorrichtung befindet und auf welches das Infrarotlichtbündel trifft, reflektiertes Infrarotlicht zu detektieren und in Abhängigkeit des detektierten reflektierten Infrarotlichts ein erstes Sensorsignal an die Steuervorrichtung zu senden,
wobei die optische Vorrichtung weiters eine time-of-flight Sensorvorrichtung aufweist, welche dazu eingerichtet ist, in einem Sensorbereich vor der optischen Vorrichtung, ein Messobjekt sensorisch zu erfassen und in Abhängigkeit des erfassten Messobjekts ein zweites Sensorsignal an die Steuervorrichtung zu senden,
wobei die Steuervorrichtung dazu eingerichtet ist, das erste Sensorsignal und das zweite Sensorsignal zu empfangen, wobei die Steuervorrichtung zumindest mit der Laserlichtquelle und/oder der Mikrospiegelvorrichtung steuerungstechnisch verbunden ist, sodass in Abhängigkeit des ersten Sensorsignals und des zweiten Sensorsignals die Steuervorrichtung die Laserlichtquelle und/oder die Mikrospiegelvorrichtung ansteuert, um die Lichtverteilung in Abhängigkeit des ersten Sensorsignals und des zweiten Sensorsignals zu verändern.

Dadurch ergibt sich der Vorteil, dass bei einem Ausfall des Infrarotdetektors eine Steuerung der Laserlichtquelle und/oder der Mikrospiegelvorrichtung auch auf Grund des zweiten Sensorsignals, welches von der time-of-flight (TOF) Sensorvorrichtung bei Erfassung eines Messobjekts erzeugbar ist, erfolgen kann. Demnach kann beispielsweise eine Sicherheitsabschaltung der Laserlichtquelle oder eine Verschwenkung der Lichtverteilung, durch entsprechende Ansteuerung der Mikrospiegelvorrichtung oder des zweiten Umlenkelements, auf Grundlage von zwei getrennten Sensorsignalen erfolgen. Weiters ergibt sich der Vorteil, dass die optische Vorrichtung, insbesondere die Lichtleitvorrichtung einen besonders kompakten Aufbau hat, da der erste Strahlengang und der zweite Strahlengang einen im Wesentlichen gleichen Verlauf aufweisen. Bevorzugt decken der Laserlichtausleuchtbereich und der Infrarotlichtausleuchtbereich, ausgehend von der Lichtleitvorrichtung, einen gleich großen Raumwinkelbereich vor der optischen Vorrichtung ab. Bevorzugt ist die Signal-Lichtverteilung, welche mit der Laserlichtquelle erzeugbar ist, beispielsweise eine DAP (Driver Assistance Projection) Lichtverteilung oder eine LSP (Light Signalling Projections) Lichtverteilung. Als Laserlichtquelle kann insbesondere eine Vorrichtung verstanden werden, welche eine Laser-Lichtverteilung in Form einer Laserlicht-Grafik erzeugen kann, wobei die erzeugbare Laserlicht-Grafik beispielsweise ein Logo oder ein anderes beliebiges grafisches Element sein kann (welches dann in weiterer Folge von der Lichtleitvorrichtung in einen Verkehrsraum projizierbar ist). Als sichtbares Laserlicht kann Laserlicht in einem Wellenlängenbereich zwischen circa 400 nm und 780 nm verstanden werden. Als Infrarotlicht kann Licht in einem Wellenlängenbereich zwischen circa 780 nm bis 1 mm verstanden werden. Die Lichtverteilung aus Laserlicht wird bevorzugt von der Mikrospiegelvorrichtung geformt. Die Mikrospiegelvorrichtung kann dazu eingerichtet sein, den Laserlichtausleuchtbereich (bzw. die Lichtverteilung) mit einem ersten Raumwinkel vor der optischen Vorrichtung auszuformen und den Infrarotlichtausleuchtbereich mit einem zweiten Raumwinkel vor der optischen Vorrichtung auszuformen, wobei der erste Raumwinkel und der zweite Raumwinkel unterschiedlich sein können, wobei der jeweilige Raumwinkel durch eine entsprechende Taktung der jeweiligen (Laser- oder Infrarot-)Lichtemissionen (durch koordinierte Ansteuerung der Laserlichtquelle und der Infrarotlichtquelle) und durch eine entsprechende Ansteuerung der einzelnen Mikrospiegel der Mikrospiegelvorrichtung erreicht werden kann. Der Infrarotlichtausleuchtbereich kann als jener Bereich (bzw. Raum) vor der optischen Vorrichtung definiert sein, der, durch die Infrarotlichtquelle im Zusammenwirken mit der Lichtleitvorrichtung, mit Infrarotlicht beleuchtbar ist. Mit anderen Worten kann der Infrarotlichtausleuchtbereich der maximal mögliche Infrarotlichtkegel sein. Ähnlich dazu kann der Laserlichtausleuchtbereich als jener Bereich (bzw. Raum) vor der optischen Vorrichtung definiert sein, in welchem, durch die Laserlichtquelle im Zusammenwirken mit der Lichtleitvorrichtung, eine Lichtverteilung abstrahlbar ist. Dabei kann die Lichtverteilung den Laserlichtausleuchtbereich teilweise oder vollständig ausfüllen. Der Laserlichtausleuchtbereich kann insbesondere auch als eine mit Laserlicht beleuchtbare Umgebung vor der optischen Vorrichtung definiert werden. Die (TOF-)Sensorvorrichtung kann einen Photomischdetektor (z.B. ein PMD-Sensor; "Photonic Mixing Device") umfassen.

Es kann vorgesehen sein, dass die Steuervorrichtung dazu eingerichtet ist, eine Orientierung der Mikrospiegel der Mikrospiegelvorrichtung derart zu verändern, dass, in Antwort auf das empfangene erste Sensorsignal und/oder zweite Sensorsignal, die Lichtverteilung nach der Orientierungsänderung der Mikrospiegel derart verändert ist, dass das Messobjekt außerhalb der Lichtverteilung liegt, und insbesondere von Laserlicht unbeleuchtet ist.

Es kann vorgesehen sein, dass die Steuervorrichtung dazu eingerichtet ist, in Antwort auf das empfangene erste Sensorsignal und/oder zweite Sensorsignal, die Laserlichtquelle auszuschalten und/oder einzuschalten.

Es kann vorgesehen sein, dass die Steuervorrichtung mit dem zweiten Umlenkelement steuerungstechnisch verbunden ist, sodass in Abhängigkeit des ersten Sensorsignals und/oder des zweiten Sensorsignals die Steuervorrichtung das zweite Umlenkelement ansteuert, um die Lichtverteilung, welche vorzugsweise innerhalb des Infrarotlichtausleuchtbereichs liegt, in Abhängigkeit des ersten Sensorsignals und/oder des zweiten Sensorsignals von einer ersten Position in eine zweite, von der ersten unterschiedliche, Position umzulenken.

Es kann vorgesehen sein, dass der Infrarotlichtausleuchtbereich größer als der Laserlichtausleuchtbereichs ist. Bevorzugt ist der Laserlichtausleuchtbereich ein Bodenbereich vor der optischen Vorrichtung (in einem Zustand, in dem die optische Vorrichtung in einem Kraftfahrzeugscheinwerfer oder in einem Kraftfahrzeug eingebaut ist).

Es kann vorgesehen sein, dass der vor dem Beleuchtungssystem mit der time-of-flight Sensorvorrichtung erfassbare Sensorbereich größer als der Infrarotlichtausleuchtbereich ist. Der mit der time-of-flight Sensorvorrichtung erfassbare Sensorbereich ist vorzugsweise mindestens 2-mal, insbesondere mindestens 4-mal größer als der Infrarotlichtausleuchtbereich. Mit "größer" ist in diesem Zusammenhang gemeint, dass eine Erfassung eines Messobjekts in einem Bereich, welcher weiter weg von der optischen Vorrichtung ist, erfolgen kann. Die Größe des Sensorbereichs und des Infrarotlichtausleuchtbereichs kann somit als die Reichweite des jeweiligen Sensors angesehen werden.

Es kann vorgesehen sein, dass der Infrarotlichtausleuchtbereich und der Laserlichtausleuchtbereich zumindest teilweise überlappen. Bevorzugt spannt der Infrarotlichtausleuchtbereich einen gleich großen oder einen größeren Raumwinkelbereich auf als der Laserlichtausleuchtbereich.

Es kann vorgesehen sein, dass der Laserlichtausleuchtbereichs im Wesentlichen vollständig innerhalb des Infrarotlichtausleuchtbereichs liegt. Damit kann eine besonders zuverlässige Erfassung eines Messobjekts erfolgen.

Es kann vorgesehen sein, dass der Laserlichtausleuchtbereichs vollständig innerhalb des Sensorbereichs liegt. Damit kann eine besonders zuverlässige Erfassung eines Messobjekts erfolgen.

Es kann vorgesehen sein, dass der Infrarotlichtausleuchtbereichs im Wesentlichen vollständig innerhalb des Sensorbereichs liegt.

Es kann vorgesehen sein, dass das erste Umlenkelement als ein Strahlvereinigungselement ausgestaltet ist, welches dazu eingerichtet ist, Laserlicht der Laserlichtquelle und Infrarotlicht der Infrarotlichtquelle zu empfangen und auf die Mikrospiegelvorrichtung zu richten, wobei das Strahlvereinigungselement zumindest eine oder mehrere Sammellinsen und/oder einen dichroitischen Spiegel umfassen kann. Das Strahlvereinigungselement, insbesondere der dichroitische Spiegel, ist vorzugweise in einem telezentrischen Strahlengang des Laserlichts und der Infrarotlichts angeordnet. Es können vor und/oder nach dem dichroitischen Spiegel zumindest eine Sammellinse angeordnet sein.

Es kann ein Kraftfahrzeugscheinwerfer vorgesehen sein, umfassend eine erfindungsgemäße optische Vorrichtung.

Es kann ein Kraftfahrzeug vorgesehen sein, umfassend eine erfindungsgemäße optische Vorrichtung oder einen Kraftfahrzeugscheinwerfer mit einer erfindungsgemäßen optischen Vorrichtung.

Erfindungsgemäß ist ein Verfahren zur Steuerung, bevorzugt zur Sicherheitsabschaltung, einer Laserlichtverteilung vorgesehen, insbesondere eine Laserlicht Bodenprojektion-Lichtverteilung oder eine Laserlicht Signal-Lichtverteilung, wobei das Verfahren die folgenden Schritte aufweist:
* Bereitstellen einer optischen Vorrichtung oder eines Kraftfahrzeugscheinwerfers mit einer optischen Vorrichtung,
* Erzeugung einer Lichtverteilung mit Laserlicht der Laserlichtquelle,
* Erzeugung eines Infrarotlichtbündels mit Infrarotlicht der Infrarotlichtquelle,
* Erzeugung eines Sensorbereich mit der Sensorvorrichtung,
* Erfassung eines Messobjekts vor der optischen Vorrichtung mit dem Infrarotdetektor und/oder mit der Sensorvorrichtung,
* Erzeugung eines ersten Sensorsignals bei Erfassung des Messobjekts mit dem Infrarotdetektor und/oder Erstellung eines zweiten Sensorsignals bei Erfassung des Messobjekts mit der Sensorvorrichtung,
* Ansteuern der Laserlichtquelle und/oder der Mikrospiegelvorrichtung mit der Steuervorrichtung in Abhängigkeit des ersten Sensorsignals und/oder des zweiten Sensorsignals, um die Lichtverteilung in Abhängigkeit des ersten Sensorsignals und des zweiten Sensorsignals derart zu verändern, dass das erfasste Messobjekt frei von Laserlicht ist.

Im Rahmen dieser Beschreibung sind die Begriffe "oben", "unten", "horizontal", "vertikal" als Angaben der Ausrichtung zu verstehen, wenn die optische Vorrichtung in normaler Benutzungsstellung angeordnet ist, nachdem sie in einem Kraftfahrzeugscheinwerfer oder einem Kraftfahrzeug eingebaut wurde.

### Kurzbeschreibung der Figuren

Die Erfindung wird nachstehend anhand eines bevorzugten Ausführungsbeispiels, auf das sie jedoch nicht beschränkt sein soll, noch weiter erläutert. Hierbei zeigt
Fig. 1 eine schematische Ansicht eines Ausführungsbeispiels einer erfindungsgemäßen optischen Vorrichtung
Fig. 2 eine schematische Ansicht von zwei Ausleuchtbereichen, welche mit der optischen Vorrichtung gemäß Fig. 1 erzeugbar sind;
Fig. 3 eine schematische Ansicht weiterer möglicher Ausleuchtbereiche; und
Fig. 4 ein Flussdiagramm, welches einen Betriebsmodus der optischen Vorrichtung darstellt.

### Figurenbeschreibung

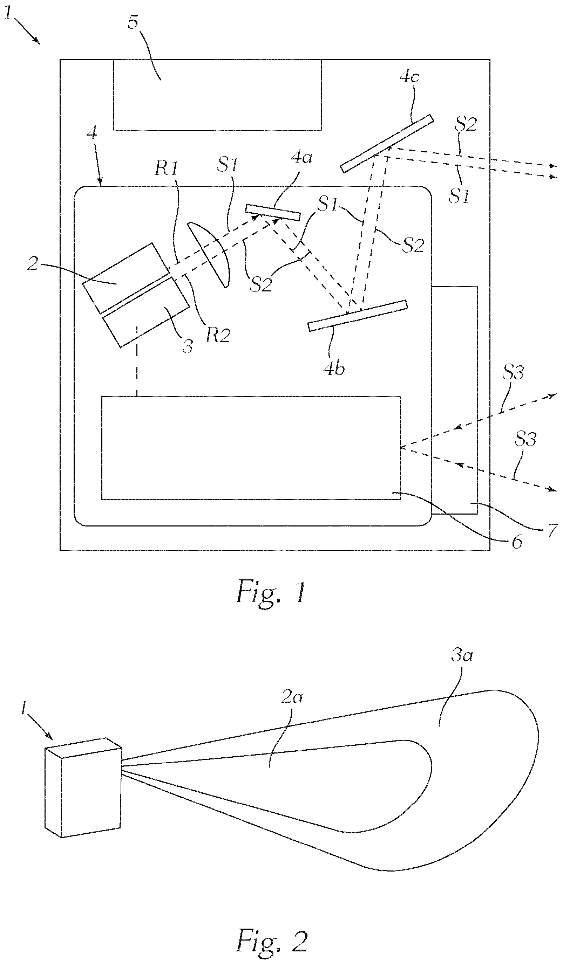

Fig. 1 zeigt eine optische Vorrichtung 1 für ein Kraftfahrzeug (nicht gezeigt), insbesondere für einen Kraftfahrzeugscheinwerfer (nicht gezeigt), wobei die optische Vorrichtung 1 zur Projektion eines Grafikelements in einem Bereich vor der optischen Vorrichtung ausgebildet ist. Der Bereich vor der optischen Vorrichtung 1 ist beispielsweise eine Verkehrsfläche.

Die optische Vorrichtung 1 umfasst eine Laserlichtquelle 2 (bzw. eine Laservorrichtung) zur Erzeugung und Abstrahlung von sichtbarem Laserlicht. Die Laserlichtquelle ist dazu eingerichtet, sichtbares Laserlicht in Form eines Grafikelements darzustellen. Das Grafikelement ist beispielsweise ein Logo, ein projizierbares grafisches Logo, eine DAP (Driver Assistance Projection) Lichtverteilung oder eine LSP (Light Signalling Projections) Lichtverteilung. Weiters umfasst die optische Vorrichtung 1 eine Infrarotlichtquelle 3 zur Erzeugung und Abstrahlung von Infrarotlicht.

Der Laserlichtquelle 2 und der Infrarotlichtquelle 3 ist eine Lichtleitvorrichtung 4 nachgeordnet, welche zur Lichtleitung von Licht entlang eines Strahlengangs ausgebildet ist. Hierfür umfasst die Lichtleitvorrichtung 4 ein erstes Umlenkelement 4a, beispielsweise ein Strahlvereinigungselement, eine Mikrospiegelvorrichtung 4b und ein zweites Umlenkelement 4c.

Die optische Vorrichtung 1 umfasst weiters einen Infrarotdetektor 5 zur Detektion von Infrarotlicht, eine time-of-flight Sensorvorrichtung 6, und eine Steuervorrichtung 7.

Die Laserlichtquelle 2 ist dazu eingerichtet, Laserlicht entlang einer Laserlichtabstrahlrichtung R1 abzustrahlen. Die Infrarotlichtquelle 3 ist dazu eingerichtet, Infrarotlicht entlang einer Infrarotlichtabstrahlrichtung R2 abzustrahlen. Die Laserlichtquelle 2 und die Infrarotlichtquelle 3 sind derart zueinander angeordnet, dass die Laserlichtabstrahlrichtung R1 im Wesentlichen parallel zur Infrarotlichtabstrahlrichtung R2 ist. Alternativ dazu kann auch ein Strahlvereinigungselement nach der Laserlichtquelle 2 und der Infrarotlichtquelle 3 angeordnet sein, welches die jeweiligen Lichtstrahlen (bzw. Lichtbündel) empfängt und dazu eingerichtet ist, diese parallel zu richten.

Die Lichtleitvorrichtung 4 ist entlang der Laserlichtabstrahlrichtung R1 und entlang der Infrarotlichtabstrahlrichtung R2 nach der Laserlichtquelle 2 und der Infrarotlichtquelle 3 angeordnet und dazu eingerichtet, mit dem Laserlicht der Laserlichtquelle 2 eine Lichtverteilung, insbesondere eine Bodenprojektion-Lichtverteilung oder eine Signal-Lichtverteilung, in einem Laserlichtausleuchtbereich 2a vor der optische Vorrichtung 1 zu erzeugen.

Die Lichtleitvorrichtung 4 ist weiters dazu eingerichtet, aus dem Infrarotlicht der Infrarotlichtquelle 3 ein Infrarotlichtbündel, mit welchem ein Infrarotlichtausleuchtbereich 3a vor der optischen Vorrichtung 1 mit Infrarotlicht ausleuchtbar ist zu erzeugen.

In Fig. 2 ist der Laserlichtausleuchtbereich 2a und der Infrarotlichtausleuchtbereich 3a gezeigt.

In dem gezeigten Ausführungsbeispiel ist der Infrarotlichtausleuchtbereich 3a größer als der Laserlichtausleuchtbereich 2a ist. Der Infrarotlichtausleuchtbereich 3a und der Laserlichtausleuchtbereich 2a können zumindest teilweise überlappen. In dem gezeigten Ausführungsbeispiel liegt der Laserlichtausleuchtbereich 2a vollständig innerhalb des Infrarotlichtausleuchtbereichs 3a. Die Position des Laserlichtausleuchtbereichs 2a kann variabel sein, abhängig von der erzeugten Laserlichtverteilung.

Zur Erzeugung der (Laser-)Lichtverteilung trifft Laserlicht der Laserlichtquelle 2 auf das erste Umlenkelement 4a, welches dazu eingerichtet ist, auftreffendes Laserlicht auf die Mikrospiegelvorrichtung 4b zu richten oder umzulenken. Die Mikrospiegelvorrichtung 4b ist dazu eingerichtet, von dem ersten Umlenkelement 4a gerichtetes oder umgelenktes Laserlicht zu empfangen und aus diesem die Lichtverteilung zu formen. Das, die Lichtverteilung formende, Laserlicht wird von der Mikrospiegelvorrichtung 4b auf das zweite Umlenkelement 4c umgelenkt, welches wiederum dazu eingerichtet ist, die Lichtverteilung vor die optische Vorrichtung 1 in den Laserlichtausleuchtbereich 2a zu lenken. Das Laserlicht folgt ausgehend von der Laserlichtquelle 2 bis zum zweiten Umlenkelement 4c einem ersten Strahlengang s1.

Zur Erzeugung des Infrarotlichtbündels trifft Infrarotlicht der Infrarotlichtquelle 3 auf das erste Umlenkelement 4a, welches dazu eingerichtet ist, das auftreffende Infrarotlicht auf die Mikrospiegelvorrichtung 4b umzulenken. Diese ist wiederum dazu eingerichtet, von dem ersten Umlenkelement 4a umgelenktes Infrarotlicht zu empfangen und aus diesem das Infrarotlichtbündel zu formen. Das Infrarotlichtbündel wird von der Mikrospiegelvorrichtung 4b auf das zweite Umlenkelement 4c umgelenkt, welches dazu eingerichtet ist, das Infrarotlichtbündel vor die optische Vorrichtung 1 in den Infrarotlichtausleuchtbereich 3a zu lenken. Das Infrarotlicht folgt ausgehend von der Laserlichtquelle 2 bis zum zweiten Umlenkelement 4c einem zweiten Strahlengang s2.

Der erste Strahlengang s1 und der zweite Strahlengang s2 haben einen im Wesentlichen gleichen Verlauf.

Der Infrarotdetektor 5 ist dazu eingerichtet, von einem Messobjekt (beispielsweise ein Verkehrsteilnehmer), welches sich vor der optischen Vorrichtung 1 befindet und auf welches das Infrarotlichtbündel trifft, reflektiertes Infrarotlicht zu detektieren. In Abhängigkeit des detektierten reflektierten Infrarotlichts sendet der Infrarotdetektor 5 ein erstes Sensorsignal an die Steuervorrichtung 7.

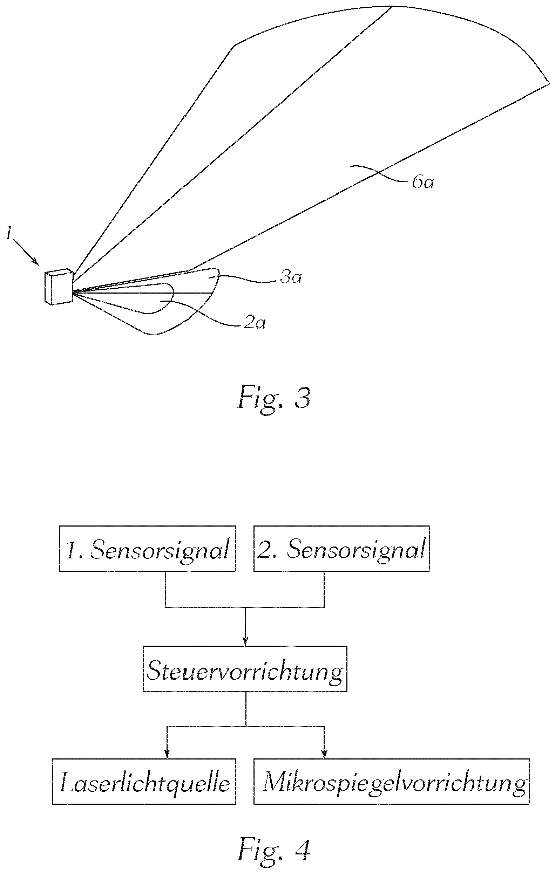

Zusätzlich dazu ist die time-of-flight Sensorvorrichtung 6 dazu eingerichtet, in einem Sensorbereich 6a vor der optischen Vorrichtung 1, ein Messobjekt sensorisch zu erfassen und in Abhängigkeit des erfassten Messobjekts ein zweites Sensorsignal an die Steuervorrichtung zu senden. Die Sensorvorrichtung 6 emittiert ein time-of-flight Sensorsignal entlang eines Sensorstrahlengangs S3. Ein Beispiel für eine Lage des Sensorbereichs 6a relativ zu dem Infrarotlichtausleuchtbereich 3a und dem Laserlichtausleuchtbereich 2a ist in Fig. 3 gezeigt.

Um die (Laser-)Lichtverteilung zu steuern, ist die Steuervorrichtung 7 dazu eingerichtet, das erste Sensorsignal und das zweite Sensorsignal zu empfangen. Die Steuervorrichtung 7 ist mit der Laserlichtquelle 2 und/oder der Mikrospiegelvorrichtung 4b steuerungstechnisch verbunden, um in Abhängigkeit des ersten Sensorsignals und des zweiten Sensorsignals die Laserlichtquelle 2 und/oder die Mikrospiegelvorrichtung 4b anzusteuern. Damit kann die Lichtfunktion in Abhängigkeit des ersten Sensorsignals und des zweiten Sensorsignals verändert werden. Damit kann, im Falle eines erfassten Messobjekts (beispielsweise ein Fußgänger) die Lichtfunktion geändert werden, um das Messobjekt frei von einer Bestrahlung mit Laserlicht zu halten.

Die Steuervorrichtung 7 ist bevorzugt dazu eingerichtet, eine Orientierung der Mikrospiegel der Mikrospiegelvorrichtung 4b derart zu verändern, dass, in Antwort auf das empfangene erste Sensorsignal und/oder zweite Sensorsignal, die Lichtfunktion nach der Orientierungsänderung der Mikrospiegel derart verändert ist, dass das Messobjekt außerhalb der Lichtverteilung liegt, und insbesondere von Laserlicht unbeleuchtet ist.

Um eine Sicherheitsabschaltung realisieren zu können, ist die Steuervorrichtung 7 dazu eingerichtet, in Antwort auf das empfangene erste Sensorsignal und/oder zweite Sensorsignal, die Laserlichtquelle 2 auszuschalten.

Die Steuervorrichtung 7 kann auch mit dem zweiten Umlenkelement 4c steuerungstechnisch verbunden sein, sodass in Abhängigkeit des ersten Sensorsignals und/oder des zweiten Sensorsignals die Steuervorrichtung 7 das zweite Umlenkelement 4c ansteuert. Damit kann die Lichtverteilung, welche z.B. innerhalb des Infrarotlichtausleuchtbereichs 3c liegt, in Abhängigkeit des ersten Sensorsignals und/oder des zweiten Sensorsignals von einer ersten Position in eine zweite, von der ersten unterschiedliche, Position umgelenkt werden. Auch dies kann dazu genutzt werden, den Laserlichtbereich von einem erfassten Messobjekt wegzulenken.

Wie in Fig. 3 gezeigt, kann der, vor der optischen Vorrichtung 1 mit der time-of-flight Sensorvorrichtung 6 erfassbare, Sensorbereich 6a größer sein als der Infrarotlichtausleuchtbereich 3a. In dem gezeigten Ausführungsbeispiel liegt der Infrarotlichtausleuchtbereich 3a zwischen dem Sensorbereich 6a und dem Laserlichtausleuchtbereich 2a. Die Bereiche 2a, 3a und 6a können jedoch auch abschnittsweise oder vollständig überlappen. Die Position des Laserlichtausleuchtbereichs 2a und des Infrarotlichtausleuchtbereichs 3a ist vorzugsweise mit dem zweiten Umlenkelement 4c steuerbar. Die Position des Sensorbereichs 6a ist mit der Sensorvorrichtung 6 steuerbar. Insbesondere können die Positionen der Bereiche 2a, 3a und/oder 6a mit dem zweiten Umlenkelement 4c in einer horizontalen Ebene ausrichtbar bzw. um eine vertikale Achse drehbar sein.

Fig. 4 zeigt ein Flussdiagramm eines Verfahrens zum Steuern der optischen Vorrichtung 1 bzw. zur Steuerung (insbesondere zur Sicherheitsabschaltung), einer Laserlichtverteilung.

In einem ersten (nicht gezeigten) Schritt, wird:
- mit der Laserlichtquelle 2 eine Lichtverteilung erzeugt;
- mit der Infrarotlichtquelle 3 ein Infrarotlichtbündel erzeugt; und
- mit der Sensorvorrichtung 6 ein Sensorbereich 6a erzeugt.

Danach kann es zur Erfassung eines Messobjekts vor der optischen Vorrichtung 1 mit dem Infrarotdetektor 5 kommen, wodurch dieser, nach Erfassung, ein erstes Sensorsignal erzeugt.

Die Erfassung des gleichen oder eines anderen Messobjekts vor der optischen Vorrichtung 1 mit der Sensorvorrichtung 6 erzeugt ein zweites Sensorsignal.

Das erste Sensorsignal und das zweite Sensorsignal werden in einem nächsten Schritt an die Steuervorrichtung 7 gesendet.

Daraufhin steuert die Steuervorrichtung 7 die Laserlichtquelle 2 und/oder die Mikrospiegelvorrichtung 4b, in Abhängigkeit des ersten Sensorsignals und/oder des zweiten Sensorsignals, an.

Damit kann die Lichtverteilung in Abhängigkeit des ersten Sensorsignals und des zweiten Sensorsignals derart verändert werden, dass das erfasste Messobjekt frei von Laserlicht ist.

## Patentansprüche

1. Optische Vorrichtung (1) für ein Kraftfahrzeug, insbesondere für einen Kraftfahrzeugscheinwerfer, zur Projektion eines Grafikelements in einen Bereich vor der optischen Vorrichtung, bevorzugt eine Verkehrsfläche, umfassend
* eine Laserlichtquelle (2) zur Erzeugung und Abstrahlung von, bevorzugt sichtbarem, Laserlicht, wobei die Laserlichtquelle dazu eingerichtet ist, sichtbares Laserlicht in Form eines Grafikelements darzustellen,
* eine Infrarotlichtquelle (3) zur Erzeugung und Abstrahlung von Infrarotlicht,
* eine Lichtleitvorrichtung (4), zur Lichtleitung von Licht entlang eines Strahlengangs, umfassend ein erstes Umlenkelement (4a), beispielsweise ein Strahlvereinigungselement, eine Mikrospiegelvorrichtung (4b) und ein zweites Umlenkelement (4c),
* einen Infrarotdetektor (5) zur Detektion von Infrarotlicht,
* eine Steuervorrichtung (7),
wobei die Laserlichtquelle (2) dazu eingerichtet ist, Laserlicht entlang einer Laserlichtabstrahlrichtung (R1) abzustrahlen, wobei die Infrarotlichtquelle (3) dazu eingerichtet ist, Infrarotlicht entlang einer Infrarotlichtabstrahlrichtung (R2) abzustrahlen, wobei die Laserlichtquelle (2) und die Infrarotlichtquelle (3) derart zueinander angeordnet sind, dass die Laserlichtabstrahlrichtung im Wesentlichen parallel zur Infrarotlichtabstrahlrichtung ist,
wobei die Lichtleitvorrichtung (4) entlang der Laserlichtabstrahlrichtung und entlang der Infrarotlichtabstrahlrichtung nach der Laserlichtquelle (2) und der Infrarotlichtquelle (3) angeordnet und dazu eingerichtet ist, mit dem Laserlicht der Laserlichtquelle (2) eine Lichtverteilung, insbesondere eine Bodenprojektion-Lichtverteilung oder eine Signal-Lichtverteilung, in einem Laserlichtausleuchtbereich (2a) vor der optische Vorrichtung (1) zu erzeugen, und aus dem Infrarotlicht der Infrarotlichtquelle (3) ein Infrarotlichtbündel, mit welchem ein Infrarotlichtausleuchtbereich (3a) vor der optischen Vorrichtung (1) mit Infrarotlicht ausleuchtbar ist, zu erzeugen,
**dadurch gekennzeichnet, dass**
zur Erzeugung der Lichtverteilung Laserlicht der Laserlichtquelle (2) auf das erste Umlenkelement (4a) trifft, welches dazu eingerichtet ist, auftreffendes Laserlicht auf die Mikrospiegelvorrichtung (4b) zu richten oder umzulenken, welche dazu eingerichtet ist, von dem ersten Umlenkelement (4a) gerichtetes oder umgelenktes Laserlicht zu empfangen und aus diesem die Lichtverteilung zu formen, wobei das die Lichtverteilung formende Laserlicht von der Mikrospiegelvorrichtung (4b) auf das zweite Umlenkelement (4c) umgelenkt wird, welches dazu eingerichtet ist, die Lichtverteilung vor die optische Vorrichtung (1) in den Laserlichtausleuchtbereich (2a) zu lenken, wobei das Laserlicht ausgehend von der Laserlichtquelle (2) bis zum zweiten Umlenkelement (4c) einem ersten Strahlengang (s1) folgt,
wobei zur Erzeugung des Infrarotlichtbündels Infrarotlicht der Infrarotlichtquelle (3) auf das erste Umlenkelement (4a) trifft, welches dazu eingerichtet ist, auftreffendes Infrarotlicht auf die Mikrospiegelvorrichtung (4b) umzulenken, welche dazu eingerichtet ist, von dem ersten Umlenkelement (4a) umgelenktes Infrarotlicht zu empfangen und aus diesem das Infrarotlichtbündel zu formen, wobei das das Infrarotlichtbündel formende Infrarotlicht von der Mikrospiegelvorrichtung (4b) auf das zweite Umlenkelement (4c) umgelenkt wird, welches dazu eingerichtet ist, das Infrarotlichtbündel vor die optische Vorrichtung (1) in den Infrarotlichtausleuchtbereich (3a) zu lenken, wobei das Infrarotlicht ausgehend von der Laserlichtquelle (2) bis zum zweiten Umlenkelement (4c) einem zweiten Strahlengang (s2) folgt,
wobei der erste Strahlengang (s1) und der zweite Strahlengang (s2) einen im Wesentlichen gleichen Verlauf aufweisen,
wobei der Infrarotdetektor (5) dazu eingerichtet ist, von einem Messobjekt, welches sich vor der optischen Vorrichtung (1) befindet und auf welches das Infrarotlichtbündel trifft, reflektiertes Infrarotlicht zu detektieren und in Abhängigkeit des detektierten reflektierten Infrarotlichts ein erstes Sensorsignal an die Steuervorrichtung (7) zu senden,
wobei die optische Vorrichtung (1) weiters eine time-of-flight Sensorvorrichtung (6) aufweist, welche dazu eingerichtet ist, in einem Sensorbereich (6a) vor der optischen Vorrichtung (1), ein Messobjekt sensorisch zu erfassen und in Abhängigkeit des erfassten Messobjekts ein zweites Sensorsignal an die Steuervorrichtung zu senden,
wobei die Steuervorrichtung (7) dazu eingerichtet ist, das erste Sensorsignal und das zweite Sensorsignal zu empfangen, wobei die Steuervorrichtung (7) zumindest mit der Laserlichtquelle (2) und/oder der Mikrospiegelvorrichtung (4b) steuerungstechnisch verbunden ist, sodass in Abhängigkeit des ersten Sensorsignals und des zweiten Sensorsignals die Steuervorrichtung (7) die Laserlichtquelle (2) und/oder die Mikrospiegelvorrichtung (4b) ansteuert, um die Lichtverteilung in Abhängigkeit des ersten Sensorsignals und des zweiten Sensorsignals zu verändern.

2. Optische Vorrichtung (1) nach Anspruch 1, wobei die Steuervorrichtung (7) dazu eingerichtet ist, eine Orientierung der Mikrospiegel der Mikrospiegelvorrichtung (4b) derart zu verändern, dass, in Antwort auf das empfangene erste Sensorsignal und/oder zweite Sensorsignal, die Lichtverteilung nach der Orientierungsänderung der Mikrospiegel derart verändert ist, dass das Messobjekt außerhalb der Lichtverteilung liegt, und insbesondere von Laserlicht unbeleuchtet ist.

3. Optische Vorrichtung (1) nach einem der vorhergehenden Ansprüche, wobei die Steuervorrichtung (7) dazu eingerichtet ist, in Antwort auf das empfangene erste Sensorsignal und/oder zweite Sensorsignal, die Laserlichtquelle (2) auszuschalten und/oder einzuschalten.

4. Optische Vorrichtung (1) nach einem der vorhergehenden Ansprüche, wobei die Steuervorrichtung (7) mit der Mikrospiegelvorrichtung (4b) steuerungstechnisch verbunden ist, sodass in Abhängigkeit des ersten Sensorsignals und/oder des zweiten Sensorsignals die Steuervorrichtung (7) die Mikrospiegelvorrichtung (4b) ansteuert, um die Lichtverteilung, welche innerhalb des Infrarotlichtausleuchtbereichs (3c) liegt, in Abhängigkeit des ersten Sensorsignals und/oder des zweiten Sensorsignals von einer ersten Position in eine zweite, von der ersten unterschiedliche, Position umzulenken.

5. Optische Vorrichtung (1) nach einem der vorhergehenden Ansprüche, wobei die Steuervorrichtung (7) mit dem zweiten Umlenkelement (4c) steuerungstechnisch verbunden ist, sodass die Steuervorrichtung (7) das zweite Umlenkelement (4c) ansteuert, um die Lichtverteilung gemeinsam mit dem Infrarotlichtausleichtbereich (3c) von einer ersten Abstrahlrichtung in eine zweite, von der ersten unterschiedliche, Abstrahlrichtung zu richten, wobei vorzugsweise die Steuervorrichtung (7) dazu eingerichtet ist, in Antwort auf das empfangene erste Sensorsignal und/oder zweite Sensorsignal, die Laserlichtquelle (2) einzuschalten.

6. Optische Vorrichtung (1) nach einem der vorhergehenden Ansprüche, wobei der Infrarotlichtausleuchtbereich (3a) größer als der Laserlichtausleuchtbereichs (2a) ist.

7. Optische Vorrichtung (1) nach einem der vorhergehenden Ansprüche, wobei der vor der optischen Vorrichtung (1) mit der time-of-flight Sensorvorrichtung (6) erfassbare Sensorbereich (6a) größer als der Infrarotlichtausleuchtbereich (3a) ist.

8. Optische Vorrichtung (1) nach einem der vorhergehenden Ansprüche, wobei der Infrarotlichtausleuchtbereich (3a) und der Laserlichtausleuchtbereich (2a) zumindest teilweise überlappen.

9. Optische Vorrichtung (1) nach einem der vorhergehenden Ansprüche, wobei der Laserlichtausleuchtbereichs (2a) im Wesentlichen vollständig innerhalb des Infrarotlichtausleuchtbereichs (3a) liegt.

10. Optische Vorrichtung (1) nach einem der vorhergehenden Ansprüche, wobei der Laserlichtausleuchtbereichs (2a) vollständig innerhalb des Sensorbereichs (6a) liegt.

11. Optische Vorrichtung (1) nach einem der vorhergehenden Ansprüche, wobei der Infrarotlichtausleuchtbereichs (3a) im Wesentlichen vollständig innerhalb des Sensorbereichs (6a) oder lateral neben dem Sensorbereich (6a) liegt.

12. Optische Vorrichtung (1) nach einem der vorhergehenden Ansprüche, wobei das erste Umlenkelement (4a) als ein Strahlvereinigungselement ausgestaltet ist, welches dazu eingerichtet ist, Laserlicht der Laserlichtquelle (2) und Infrarotlicht der Infrarotlichtquelle (3) zu empfangen und auf die Mikrospiegelvorrichtung (4b) zu richten, sodass das Laserlicht im Wesentlichen parallel zum Infrarotlicht orientiert ist, wobei das Strahlvereinigungselement zumindest eine oder mehrere Sammellinsen und/oder einen dichroitischen Spiegel umfasst.

13. Kraftfahrzeugscheinwerfer, umfassend eine optische Vorrichtung (1) nach einem der vorhergehenden Ansprüche.

14. Kraftfahrzeug, umfassend eine optische Vorrichtung (1) nach einem der Ansprüche 1 bis 12 oder einen Kraftfahrzeugscheinwerfer nach Anspruch 13.

15. Verfahren zur Steuerung, bevorzugt zur Sicherheitsabschaltung, einer Laserlichtverteilung, insbesondere eine Laserlicht Bodenprojektion-Lichtverteilung oder eine Laserlicht Signal-Lichtverteilung, wobei das Verfahren die folgenden Schritte aufweist:
* Bereitstellen einer optischen Vorrichtung (1) gemäß einem der Ansprüche 1 bis 12 oder eines Kraftfahrzeugscheinwerfers gemäß Anspruch 13 oder eines Kraftfahrzeugs gemäß Anspruch 14,
* Erzeugung einer Lichtverteilung mit Laserlicht der Laserlichtquelle,
* Erzeugung eines Infrarotlichtbündels mit Infrarotlicht der Infrarotlichtquelle,
* Erzeugung eines Sensorbereich (6a) mit der Sensorvorrichtung (6),
* Erfassung eines Messobjekts vor der optischen Vorrichtung (1) mit dem Infrarotdetektor (5) und/oder mit der Sensorvorrichtung (6),
* Erzeugung eines ersten Sensorsignals bei Erfassung des Messobjekts mit dem Infrarotdetektor (5) und/oder Erstellung eines zweiten Sensorsignals bei Erfassung des Messobjekts mit der Sensorvorrichtung (6),
* Ansteuern der Laserlichtquelle (2) und/oder der Mikrospiegelvorrichtung (4b) mit der Steuervorrichtung (7) in Abhängigkeit des ersten Sensorsignals und/oder des zweiten Sensorsignals, um die Lichtverteilung in Abhängigkeit des ersten Sensorsignals und des zweiten Sensorsignals derart zu verändern, dass das erfasste Messobjekt frei von Laserlicht ist.
